# EUROPEAN PATENT SPECIFICATION

(11) **EP 3 646 481 B1**
(45) Date of publication and mention of the grant of the patent: **08.09.2021**
(21) Application number: 18739598.3
(22) Date of filing: 28.06.2018
(51) Int. Cl.: H04B 7/06

(54) **COMMUNICATING WITH A MOBILE DEVICE**
KOMMUNIKATION MIT EINEM MOBILEN GERÄT
COMMUNICATION AVEC UN DISPOSITIF MOBILE

(30) Priority: 30.06.2017 GB 201710531
(43) Date of publication of application: 06.05.2020
(73) Proprietor: First Rail Holdings Limited, London NW1 5DH (GB)
(72) Inventor: TILA, Fai, Bristol Bristol BS8 1TH (GB); NIX, Andrew, Bristol Bristol BS8 1TH (GB); WAUGH, Duncan, London Greater London NW1 5DH (GB)
(74) Representative: Haseltine Lake Kempner LLP
(86) International application number: PCT/GB2018/051808
(87) International publication number: WO 2019/002867

(56) References cited:
- US-A1- 2006 189 355
- US-A1- 2016 047 884

## Description

The present invention relates to the use of beams for communicating between a base station and a mobile device. In particular, the invention is concerned with providing communication between base stations and moving mobile devices located on vehicles, such as train carriages.

### Background

The provision of broadband communication services is of growing importance to train operators. These can be used to enhance rail passenger experience, satisfaction and productivity.

One typical method of providing such services is to locate a network node in the train, to which passengers connect directly. For example, the network node may be a Wi-Fi access point, with passengers connecting to and receiving service from the access point via Wi-Fi communications. A modem device (which may form part of the network node or be coupled to it) is also provided on the train, and this provides a link to trackside network infrastructure. Thus multiple terminal devices receive service from the network node on the train, while the network node itself receives service via a fronthaul and/or backhaul link with trackside infrastructure.

One problem with such a system is that bottlenecks may arise from capacity limitations in the link between the train and trackside network infrastructure.

Millimetre wave (mmWave) communication is expected to be a key enabling technology with the potential to deliver high capacity, high peak data rate communications for future railway services. The use of a spectrum (e.g., 24-300GHz), which includes the mmWave spectrum (30 to 300 GHz), enables multi-gigabit-per-second communications to and from high-speed trains (HSTs). The IEEE 802.11ad standard has already created considerable interest in the use of 60GHz unlicensed spectrum. The use of mmWave spectrum is also expected as part of the developing 5G standard (which is also referred to as millimetre "New Radio", NR). For example, 26 GHz may be used for transmissions in this field in the UK.

However, mmWave technology presents its own difficulties. For example, the higher frequencies of such transmissions are associated with higher attenuation rates. Further, the train may be moving at high speed relative to the trackside infrastructure. Maintaining a link between the train modem and the network infrastructure is therefore difficult, let alone achieving the high data rates required to serve multiple passengers, sometimes in the order of several hundred passengers, over the same link.
US 2006/189355 describes a communication system that directs a shaped beam at a plurality of predetermined directions.

US 2016/0047884 describes searching for a desired beam direction from a transmitter to a receiver based in part on an estimated position of the receiver.

### Summary

Aspects of the disclosure are defined in the claims appended hereto.

According to a first example there is provided a controller for a radio access node, the radio access node comprising a plurality of antenna elements for communicating wirelessly with a mobile device. The controller comprises: a location module for obtaining location information relating to a location of the mobile device, the location information comprising information relating to the location of the mobile device along a predetermined path, and a beam module configured to select, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the mobile device on the predetermined path.

The second beam is wider than the first beam, and the first location is a larger distance from the radio access node than the second location.

Another example of the disclosure provides a controller for a mobile device, the mobile device comprising a plurality of antenna elements for communicating with a radio access node. The controller comprises: a location module for obtaining location information relating to a location of the mobile device, the location information comprising information relating to the location of the mobile device along a predetermined path, and a beam module configured to select, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the radio access node in accordance with the location of the mobile device along the predetermined path.

The second beam is wider than the first beam, and the first location is a larger distance from the radio access node than the second location.

An example of the disclosure provides a method of selecting an antenna configuration for an antenna array providing communication between a radio access node and a mobile device. The method comprises obtaining location information relating to the location of the mobile device, the location information comprising information relating to the location of the mobile device along a predetermined path. and selecting, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the mobile device on the determined path. The second beam is wider than the first beam, and the first location is a larger distance from the radio access node than the second location.

A further example provides a method of initiating a handover procedure to handover a mobile device from a first radio access node to a second radio access node, the mobile device constrained to move along a predetermined path. The method comprises: obtaining location information relating to the location of the mobile device along the predetermined path; and initiating the handover procedure based on the location of the mobile device.

### Brief Description of the Drawings

For a better understanding of the present invention, and to show how it may be put into effect, reference will now be made, by way of example only, to the accompanying drawings, in which:-
Figure 1 illustrates a trackside system comprising a plurality of base stations and a train carriage comprising a mobile device;
Figure 2 illustrates a method of selecting an antenna configuration for a plurality of antenna elements providing communication between a base station and a mobile device according to some embodiments;
Figure 3a illustrates example beams produced by different antenna configurations in an antenna array at a base station;
Figure 3b illustrates example beams produced by different antenna configurations in an antenna array at a mobile device;
Figure 4 illustrates an example beam produced by a selected antenna configuration;
Figure 5 illustrates a method of initiating a handover procedure of a mobile device from a first base station to a second base station;
Figure 6 illustrates an example of a handover region;
Figure 7 illustrates an example of a base station and a mobile device; and
Figure 8 illustrates a further example of a base station and a mobile device.

### Detailed description

The description below sets forth example embodiments according to this disclosure. Further example embodiments and implementations will be apparent to those having ordinary skill in the art. Further, those having ordinary skill in the art will recognize that various equivalent techniques may be applied in lieu of, or in conjunction with, the embodiments discussed below, and all such equivalents should be deemed as being encompassed by the present disclosure.

Embodiments of the present disclosure relate to methods and apparatus for selecting an antenna configuration for a plurality of antenna elements providing communication between a mobile device and a base station, so as to select a corresponding beam or beams for communication between the mobile device and the base station. The plurality of antenna elements may be provided in the mobile device and/or the base station. Embodiments of the present disclosure also relate to providing handover of a mobile device between first and second base stations. In some embodiments, the mobile device is moving along a predetermined path, such as a railway track.

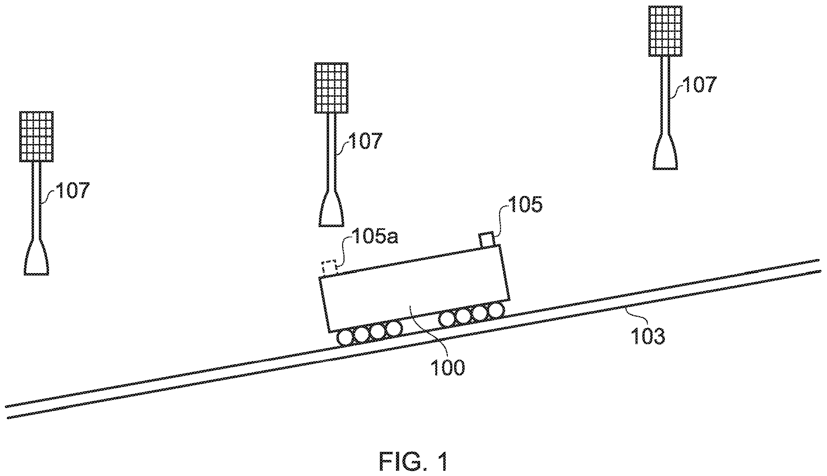

**Figure 1** illustrates an example system according to embodiments of the disclosure. In this example, a train carriage 100 travels along a predetermined pathway 103, which is dictated by the position of railway tracks.

The train comprises a mobile device 105 and, optionally, further comprises at least one additional mobile device 105a. The predetermined pathway 103 runs alongside a plurality of base stations (or radio access nodes) 107, which communicate wirelessly with the mobile device(s) 105, 105a as the train carriage 100 moves along the track. The base stations 107 may additionally be coupled to a network (not illustrated) that enables the provision of communication services to and from the mobile device 105 via the base stations 107. For example, the network may comprise a fronthaul/backhaul network providing a connection from/to a core network.

The wireless link between the base stations 107 and the mobile device(s) 105, 105a may be based on any radio access technology. However, in some embodiments of the disclosure, the wireless link may utilize transmissions, for example, within a spectrum (e.g., 24-300GHz), which includes the mmWave spectrum (30 to 300 GHz).

The train carriage 100 may further comprise a wireless node (not illustrated) coupled to the mobile device(s) 105, 105a, and providing wireless communication services to the users (i.e. passengers) on board via the same or different radio access technologies. For example, the wireless node may comprise a wireless access point (AP), operable to provide Wi-Fi services to the passengers on board. Alternatively, the wireless node may provide cellular services, operable to communicate data received via the mobile device 105, i.e., as a base station itself. The wireless node may operate as part of a radio access network. In some embodiments, the wireless node may provide a fronthaul/backhaul connection to the core network.

Thus devices belonging to the passengers on board the carriage 100 connect to the wireless node, rather than directly to the base stations 107. The link between the wireless node and the trackside network is provided via the link between the mobile device(s) 105, 105a and the base stations 107.

In this example, the base stations 107 each comprise an antenna array for communicating with the mobile device 105 situated on the train carriage 100. In some embodiments the mobile device 105 also comprises an antenna array. The use of an antenna array in either or both of the base stations 107 and the mobile device(s) 105, 105a enables beamforming techniques to be employed as will be described in further detail below.

The pathway 103 is thus predetermined in that the location of the tracks with respect to the base stations 107 is known by the base stations 107, and conversely the locations of the base stations 107 with respect to the tracks is known by the train carriage 100 or mobile device 105. Although it is possible for the train carriage 100 to move along different routes (e.g. through configuration of switches or points in the tracks), the position of the tracks themselves do not change (or do not change significantly) over time. Those skilled in the art will appreciate that similar circumstances may arise in different scenarios, and thus embodiments of the present disclosure are not limited to communications between a train carriage and base stations at trackside. For example, buses can be expected to move along well-defined predetermined routes for the majority of their service. Future development of autonomous driverless vehicles may lead to solutions in which vehicles move along well-defined, predetermined paths, for at least a portion of their journeys. Thus embodiments of the present disclosure may relate to wireless communications with any mobile device moving along a predetermined, or otherwise predictable path, and particularly to such mobile devices located in or affixed to vehicles.

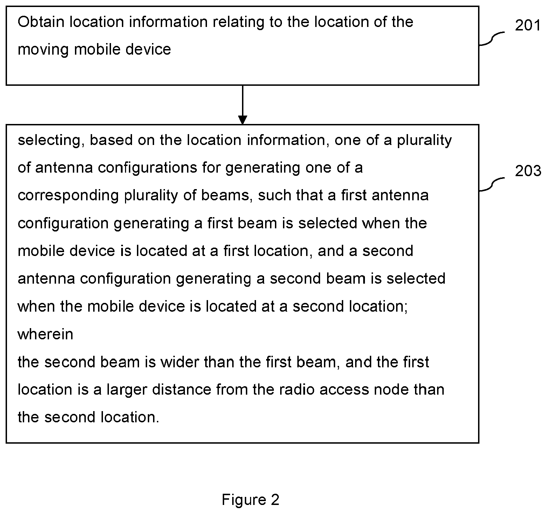

**Figure 2** illustrates a method of selecting an antenna configuration for a plurality of antenna elements providing communication between a base station and a mobile device according to some embodiments. The method may be performed in either a radio access node (such as one of the base stations 107) or a mobile device (such as either or both of the mobile devices 105, 105a), and specifically may be performed by a controller of such a node or device (such as processing circuitry within the node or device, or a controlling node remote from such a node or device). For simplicity, the method will be described as being performed by a controller. However, it will be appreciated that this may be a controller for a radio access node (i.e. operable to select an antenna configuration for the radio access node), or a controller for a mobile device (i.e. operable to select an antenna configuration for the mobile device).

In some embodiments the plurality of antenna elements are arranged in an antenna array. In this example, the controller may have access to a plurality of antenna configurations, collectively termed herein as a "codebook". Each antenna configuration may correspondingly be called a codeword, or code vector, and comprise respective weightings or parameters to be applied to the phases and/or amplitudes of signals transmitted or received by each of a plurality of antenna elements within the antenna array. The antenna configurations may therefore define the application of beamforming in the antenna array to the transmission and reception of wireless signals. Each antenna configuration may therefore be associated with a corresponding beam, having a respective direction or axis and a respective width. The respective direction of the antenna configurations may be changed by altering the phase and/or the phase and the amplitude of the signals transmitted or received by each of a plurality of antenna elements within the antenna array.

Alternatively, the plurality of antenna elements may comprise multiple different antenna horns arranged with different beam widths and look directions. The antenna configurations may then define how the controller switches between using the different antenna horns. As the different antenna horns have different look directions, e.g they may point towards different places on the path 103, and they may have different widths, each antenna configuration may therefore be associated with a corresponding beam, having a respective direction or axis and a respective width.

Each of the antenna configurations may be predetermined based on the predetermined path 103. For example, each antenna configuration may be associated with a beam having a direction pointing towards the path 103. Each of the antenna configurations in the codebook may be associated with beams having different respective directions, pointing towards different parts of the path 103. According to some embodiments, where the base stations 107 are configured only to communicate with train carriages, the codebook may comprise only antenna configurations which target the predetermined path 103. Alternatively, the different antenna horns may be configured to have look directions which only point towards the predetermined path.

The plurality of antenna configurations may be arranged in a predetermined sequence, such that beams generated according to the predetermined sequence target locations in a progressive sequence along the path 103. If the train 100 is able to move in either direction along the path 103, the predetermined sequence may be defined or utilized in forward or reverse directions, so as to target the mobile device(s) 105, 105a accordingly.

In step 201, the controller obtains location information relating to the location of the mobile device. For example, the location information may comprise information relating to the location of the mobile device on a predetermined path. In the example of figure 1, the location information may comprise an indication as to what point along the predetermined path 103 the train carriage has reached. This information may in some examples be provided by a a Global Navigation Satellite System (GNSS), for example, a Global Positioning System (GPS), a Globalnaya Navigazionnaya Sputnikovaya Sistema (GLONASS) system, a Galileo system or a BeiDou system, substantially collocated with the mobile device 105. For example, the mobile device 105 may comprise a location module which may comprise a global positioning system.

In some examples, the received GNSS information may be combined with information about the predetermined path 103 in order to determine the location information. For example, the information about the predetermined path 103 may be used to correct any errors in the received GNSS data.

Where the controller is operative to control the mobile device, the location information is therefore available directly from the mobile device itself.

Where the controller is operative to control a base station, the location information may similarly be obtained directly or indirectly from the mobile device 105. For example, in some embodiments the mobile device may transmit location information directly to the base station. Such transmissions may take place via a side-channel to any data channel existing between the antenna array of the base station 107 and the antenna array of the mobile device 105 (i.e. separate from the beamed signals defined hereinafter). Such a side-channel may operate on a lower radio frequency, and may therefore offer wide coverage and be more reliable and robust than the beamed communications. Alternatively or additionally, the location information may be provided from the mobile device 105 to an intermediate device or server, to which the controller for the base station has access. In still further embodiments, the trackside infrastructure may itself comprise components which are operative to determine the location of the mobile device 105. For example, sensors along the path 103 (i.e. on the tracks) may detect the presence of the carriage 100 and provide that location information to the controller, enabling the controller to infer the location of the mobile device 105. Many alternative embodiments are possible and the present disclosure is not limited in that respect.

The location information may further comprise velocity information of the mobile device 105, and/or acceleration information of the mobile device. Such additional information may enable the controller to infer the location of the mobile device when up-to-date location information is not available. For example, the controller may infer the location of the mobile device at a time t₁ based on the location and velocity (and potentially the acceleration) of the mobile device at an earlier time to. Such embodiments may be useful when the availability of location information is limited, and may be particularly useful in embodiments when the mobile device is provided on a train or other large-scale device with a high moment of inertia. Alternatively, the velocity of the mobile device 105 may be inferred based on the locations of the mobile device at different times.

In step 203 the controller selects an antenna configuration for the antenna array based on the location information. The selection is performed such that a first antenna configuration generating a first beam is selected when the mobile device is located at a first location, and a second antenna configuration generating a second beam is selected when the mobile device is located at second location. In particular, the second beam is wider than the first beam and the first location is a larger distance from the base station than the second location. The controller may therefore be operative to select a wider beam when the mobile device and the base station are closer together; and a narrower beam when the mobile device and the base station are further apart.

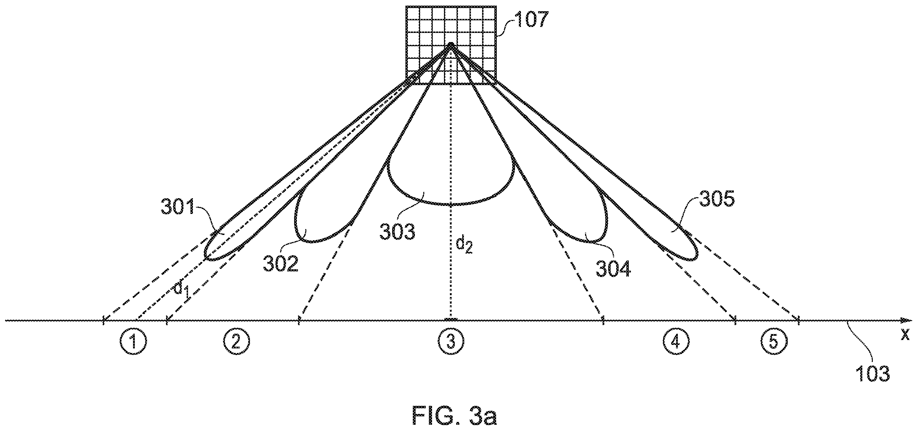

**Figure 3a** illustrates example beams produced by different antenna configurations in an antenna array at a base station. In this example, the antenna array for base station 107 covers a region of the predetermined pathway 103 denoted by sections 1 to 5.

When the mobile device 105 is located in section 1, the base station is configured to select an antenna configuration which results in beam 301. Beam 301 has a direction or axis which is directed towards section 1, and is also relatively narrow. The narrow beam 301 allows the signal to reach the mobile device 105 even though the mobile device 105 would be located some relatively large distance d₁ away from the base station 107.

In contrast, when the mobile device 105 is located within section 3 of the predetermined path way 103, a distance d₂ from the base station (which is less than di), the base station is configured to select an antenna configuration which provides beam 303. Beam 303 is wider than the beam 301.

In some embodiments, the beam width may be defined according to a function such that the beam width varies inversely to the distance between the base station 107 and the mobile device 105.

In some embodiments, the power transmitted by the base station 107 may be the same or substantially the same for each of the beams 301, 302, 303, 304 and 305. In this way, when the mobile device 105 is located further away the base station 107, the power transmitted by the base station 107 is focussed on a smaller area and will therefore travel a greater distance without significant attenuation. Further, when they are relatively far apart, the vector between the mobile device and the base station changes direction relatively slowly; the mobile device is therefore targeted by the beam 301, for example, for a relatively long time even though the beam is narrow. When they are relatively close to each other, the vector between the mobile device and the base station changes relatively quickly. The wider beam 303 thus ensures that the mobile device 105 remains within the beam for a reasonable length of time, despite the rapid motion of the mobile device with respect to the base station. Thus the rate at which the base station must switch between beams is reduced.

Further, the widths of the beams may be controlled so as to reduce the propagation of multiple paths between the base station and the mobile device (e.g. as the result of reflections or scattering from surfaces in the vicinity of the base station and the mobile device). For example, the controller may be configured to select only antenna configurations having an associated beam width that is less than a maximum beam width.

Spatial filtering may be provided by both the beams produced by the base station 107 and beams produced by mobile device 105. In particular, the selected antenna configurations (or codewords or code vectors) at the base station 107 and the mobile device 105 may be different.

The antenna array of the base station 107 may therefore select antenna configurations resulting in wider beams when the mobile device 105 is located closer to the base station 107, and antenna configurations resulting in narrower beams when the mobile device 105 is located further from the base station.

Therefore, as the mobile device 105 moves from within section 1 of the predetermined path through to section 5 of the predetermined path 103, the antenna configuration will be selected such that the beams 301, 302, 303, 304, and 305 are produced when required. Thus, in this embodiment, the antenna configurations are arranged in a predetermined sequence, i.e., a predetermined codebook sequence, to produce beams 301, 302, 303, 304, and 305. It will be appreciated that if the mobile device 105 were to be travelling in the opposite direction, the order of the beams would be reversed. In either arrangement, the location information may comprise an indication that the mobile device 105 has moved from one section (i.e. from sight of one beam) to another section (i.e. into sight of the next beam), thus prompting switching to the next beam in the predetermined sequence.

Embodiments of the disclosure may provide further benefits by basing the selection of an antenna configuration based on location information. For example, in conventional beamforming systems (i.e. without knowledge of the mobile device location), a transmitter or receiver may commence a beam searching method upon losing connection. This results in a high level of signalling, lost connections, and wasted power.

In contrast, in some embodiments described herein, a particular antenna configuration (i.e. one selected based on the location of the mobile device, etc) may be maintained in spite of a lost connection. That is, as the mobile device 105 is travelling along a predetermined path 103 and the location of the mobile station along this path is known, the base station can be sure that the particular antenna configuration is the correct one even though the connection has been lost. For example, a physical obstruction may have temporarily blocked the line of sight between the base station 107 and the mobile device 105. No beam-searching method needs to be implemented, as the base station 107 knows the location of the mobile device 105. Therefore, when the physical obstruction is removed, the beam from the base station quickly rediscovers the mobile device 105 and communications can resume.

In some embodiments, the speed of the movement of the mobile device 105 may also be known to the base station 107, and used to predict the location of the mobile device along the predetermined path so as to select the correct antenna configuration in the event of a lost connection.

In some embodiments, historical data relating to the success rate of maintaining connection whilst switching antenna configuration may be used to determine the location of the mobile device at which to switch antenna configurations. Alternatively, historical data may be used to determine which antenna configurations to use for different sections of the predetermined path. For example, a server in the network (not illustrated) may collate information relating to the locations at which a communication link between the base station 107 and the mobile device 105 were re-established following changes in antenna configuration, and update the location at which the antenna configuration is configured to change from one configuration to another (i.e. from one configuration in the sequence to the next configuration in the sequence). For example, the server may implement a machine-learning algorithm in order to determine the location, or may determine the average position at which a change in antenna configuration was successful for a number of previous attempts (i.e. within a rolling window). The predetermined location may thus be updated as conditions within the network and the external environment change.

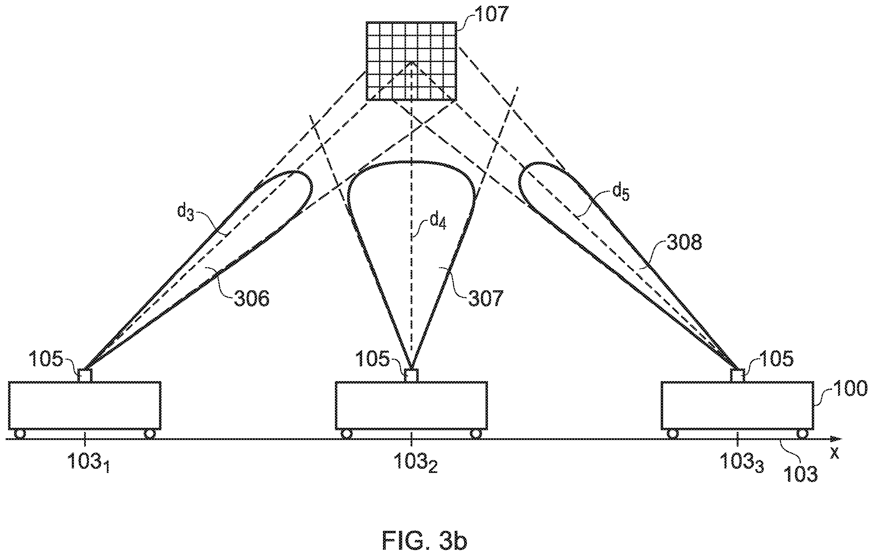

**Figure 3b** illustrates example beams produced by different antenna configurations in an antenna array at a mobile device 105.

In this example, the mobile device 105 is illustrated as moving between positions 103₁, 103₂ and 103₃ along the predetermined path 103. The mobile device 105 is located on the train carriage 100. In this example, when the mobile device 105 is located at position 103₁ the mobile device controller is configured to select a first antenna configuration which results in generation of a beam 306. The beam 306 is directed towards the location of the base station antenna array 107.

The antenna configuration may therefore be selected in the mobile device so as to target a particular base station 107, based on a location of the mobile device 105. The selection of antenna configurations in the mobile device 105 may be pre-programmed, based on the known locations of the base stations along the path 103, so that the mobile device 105 utilizes the correct beams to target base stations as the location of the mobile station changes. Alternatively, the mobile device 105 may be provided with the locations of base stations 107. In the latter case, the mobile device 105 may select an antenna configuration based on the location of the mobile device and the location of the base station 107.

It will be noted that the beam 306 is relatively narrow. Again this is due to the relatively large distance, d₃, between the mobile device 105 and the base station 107.

As the mobile device 105 moves to position 103₂ the mobile device controller is configured to select a second antenna configuration for the antenna array of the mobile device 105, which results in beam 307. Again, it will be noted that beam 307 is also directed towards the location of the base station 107. However, beam 307 is relatively wide, or at least wider than the beam 306. This selection is due to the mobile device 105 at position 103₂ being a relatively small distance, d₄, from the base station 107, or at least the distance d₄ is smaller than the distance d₃.

As the mobile device 105 moves to position 103₃ the mobile device controller is configured to select a third antenna configuration for the antenna array of the mobile device 105 which results in beam 308. Again, beam 308 is directed towards the base station 107. However, beam 308 is relatively narrow, or at least narrower than the beam 307, due to the mobile device 105 at position 103₃ being a relatively large distance, d₅, from the base station, or at least the distance d₅ is larger than the distance d₄.

Similar to the discussions above with reference to figure 3a, in some embodiments historical data relating to the success rate of maintaining connection whilst switching antenna configuration may be used to determine the location of the mobile device at which to switch antenna configurations. Alternatively, historical data may be used to determine which antenna configurations to use for different sections of the predetermined path. For example, a server in the network (not illustrated) may collate information relating to the locations at which a communication link between the base station 107 and the mobile device 105 were re-established following changes in antenna configuration, and update the location at which the antenna configuration is configured to change from one configuration to another (i.e. from one configuration in the sequence to the next configuration in the sequence). For example, the server may implement a machine-learning algorithm in order to determine the location, or may determine the average position at which a change in antenna configuration was successful for a number of previous attempts (i.e. within a rolling window). The predetermined location may thus be updated as conditions within the network and the external environment change.

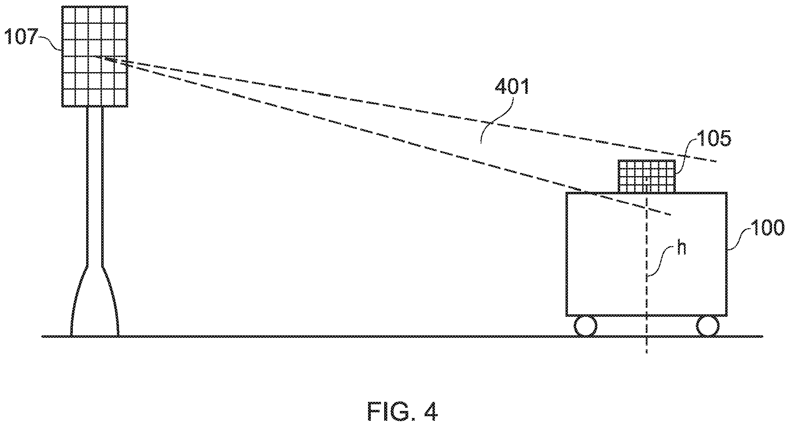

**Figure 4** illustrates an example beam produced by a selected antenna configuration. In some embodiments the antenna configurations may be configured such that the resulting beams have a relatively narrow elevation, as shown for example in beam 401. In other words, using spherical polar co-ordinates, the inclusive polar angle of the beam from the base station may be relatively small. If the position of a particular mobile device 105 on a train or other vehicle is known, and therefore the height, h, above the ground that the mobile device will be located at is also known, the beams can be designed with a relatively narrow elevation, focussed on that height h. This again allows for a reduction in the transmit power needed, as no power is wasted in directions not in the targeted elevation range.

As defined herein, therefore, beams may be considered wider, or narrower, in that the inclusive azimuthal angle of one beam is wider or narrower than another beam. The inclusive azimuthal angle of each beam may be greater than the inclusive polar angle of each beam.

Alternatively, beams may be considered wider or narrower according to their solid angle. Thus, a wider beam may have a greater solid angle than a narrower beam.

It will be understood by those skilled in the art that the same situation occurs in reverse, with the beams from the mobile device 105 being able to target the base station 107 in a narrow window or elevation. Thus, if the height above ground of a base station antenna array is known, the antenna configurations selected by the mobile device controller can be designed such that the resulting beams are focused in elevation towards the height of the antenna array of the base station.

Thus the present disclosure provides methods, apparatus and systems whereby a mobile device and a base station can utilize beams, such as may be created using beamforming techniques, to communicate with each other.

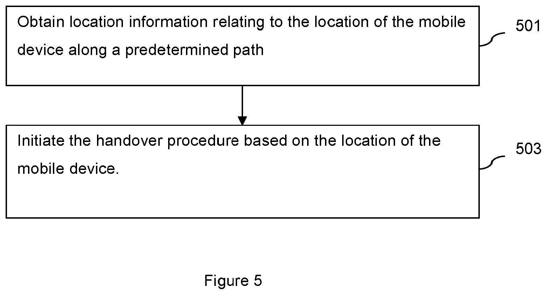

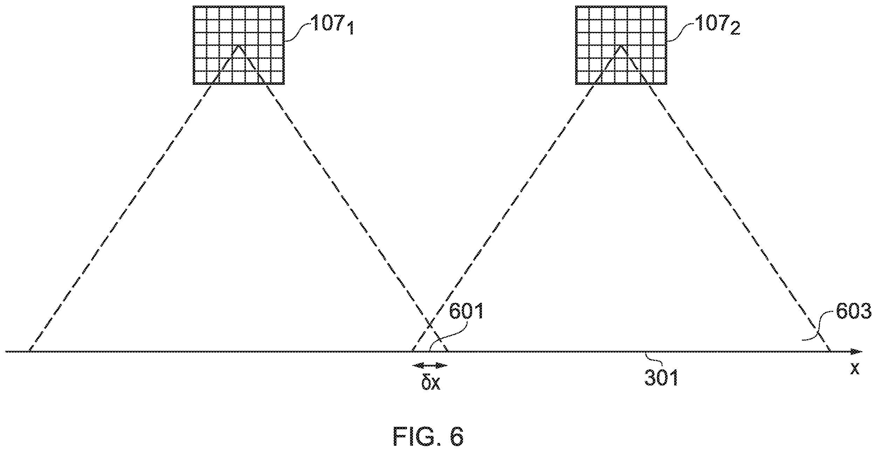

A further aspect of the disclosure utilizes the same system as described above with respect to Figure 1, and relates to the handover of the mobile device from one base station to another. In some embodiments, as the location of the mobile device 105 along the predetermined path 103 is known by the base station 107, and the location of the plurality of base stations 107 is predetermined, and hence can be known by the mobile device 105, a handover procedure can be initiated by either the mobile device or the base station, based on the location of the mobile device 105 on the predetermined path. In other words, rather than performing handover based on the signal strength received by the mobile station 105, or some other parameter relating to the quality of service received by the mobile device 105, the handover procedure may be initiated solely based on the location of the mobile device 105. This will be discussed in more detail with respect to figures 5 and 6.

**Figure 5** illustrates a method of initiating a handover procedure of a mobile device 105 from a first base station 107₁ to a second base station 107₂. This method may be performed in either a controller for a mobile device or a controller for a base station (or both). In particular, the controller may comprise a handover module configured to initiate a handover procedure to handover the mobile device 105 from a first base station 107₁ to a second base station 107₂, in accordance with the following description.

In step 501 the method comprises obtaining location information relating to the location of the mobile device 105 along a predetermined pathway 103. As discussed above, this location information may be provided by a Global Navigation Satellite System (GNSS) substantially collocated with the mobile device 105. For example, the mobile device 105 may comprise a location module which may comprise a global positioning system.

Where the controller is operative to control the mobile device, the location information is therefore available directly from the mobile device itself.

Where the controller is operative to control a base station, the location information may similarly be obtained directly or indirectly from the mobile device 105. For example, in some embodiments the mobile device may transmit location information directly to the base station. Such transmissions may take place via a side-channel to any data channel existing between the antenna array of the base station 107 and the antenna array of the mobile device 105 (i.e. separate from the beamed signals defined above). Alternatively or additionally, the location information may be provided from the mobile device 105 to an intermediate device or server, to which the controller for the base station has access. In still further embodiments, the trackside infrastructure may itself comprise components which are operative to determine the location of the mobile device 105. For example, sensors along the path 103 (i.e. on the tracks) may detect the presence of the carriage 100 and provide that location information to the controller, enabling the controller to infer the location of the mobile device 105. Many alternative embodiments are possible and the present disclosure is not limited in that respect.

The location information may further comprise velocity information of the mobile device 105, and/or acceleration information of the mobile device. Such additional information may enable the controller to infer the location of the mobile device when up-to-date location information is not available. For example, the controller may infer the location of the mobile device at a time t₁ based on the location and velocity (and potentially the acceleration) of the mobile device at an earlier time to. Such embodiments may be useful when the availability of location information is limited, and may be particularly useful in embodiments when the mobile device is provided on a train or other large-scale device with a high moment of inertia. Alternatively, the velocity of the mobile device 105 may be inferred based on the locations of the mobile device at different times.

In step 503 the method comprises initiating the handover procedure based on the location of the mobile device 105. The handover module may be configured to initiate handover of the mobile device when the mobile device reaches a location on the pre-determined path at which the coverage of the second base station is determined to be available, or at which a signal quality parameter (such as received signal strength indicator, signal to noise ratio, etc) of the second base station is expected to exceed the corresponding signal quality parameter of the first base station (or to exceed the parameter by a threshold value). In other words, as the path on which the mobile device is travelling is known, and the positions of the base stations are fixed, handover of the mobile device can be programmed to be initiated at a particular location at which the handover is expected to succeed. This may reduce the signalling required to perform handover procedures, and/or reduce the signal measurements performed by the mobile device or the base station.

For example, there is no need to perform measurements on signals received from candidate base stations as the mobile device 105 may perform handover regardless of the received signals. This is because it is aware, due to knowledge of the predetermined path and its location, that is has entered the coverage area of the second base station 107₂. By initiating handover procedures based on the location of the mobile device 105, a small handover region is produced in which handover can be achieved successfully and rapidly.

In contrast, if the location information was not taken into account, the handover region would need to be much larger to give time for the extra signalling required to determine if handover is appropriate. Due to this extra signalling, the overlap in coverage areas provided by adjacent base stations may need to be larger in order to provide successful handovers, and therefore more base stations would be required in order to service a given path 103.

**Figure 6** illustrates an example of a handover region. The base stations 107₁ and 107₂ have coverage areas 602 and 603. These coverage areas may be configured to overlap in a handover region 601 comprising a distance dx along the predetermined path 103. When the mobile device 105 enters the handover region 601, it may initiate a handover procedure between the first and second base stations 107₁, 107₂. Alternatively, the current serving base station 107₁ may initiate the handover procedure. In either case, the handover procedure may be initiated via a request message transmitted from the requesting device (i.e. the base station 107₁ or the mobile device 105) without performing measurements, etc.

In some embodiments the predetermined location at which handover is initiated may be determined based on historical data relating to past handover attempts between the first and second base stations 107₁, 107₂. For example, a server in the network (not illustrated) may collate information relating to the locations at which handovers of mobile devices between the first and second base stations 107₁, 107₂ were successful, and update the location at which the handover procedure is initiated. For example, the server may implement a machine-learning algorithm in order to determine the location, or may determine the average position at which handover was successful for a number of previous attempts (i.e. within a rolling window). The predetermined location may thus be updated as conditions in the network and its environment change.

In some embodiments, where a train carriage 100 comprises more than one mobile device 105 and 105a, one mobile device 105 may be configured to handover from a serving base station to a second base station before the other mobile device 105a. That is, the mobile device 105a may be configured not to initiate a handover procedure until mobile device 105 has completed its own handover procedure. This ensures that any user devices connected to services being provided by the mobile devices 105 and 105a may remain connected throughout the handover procedure.

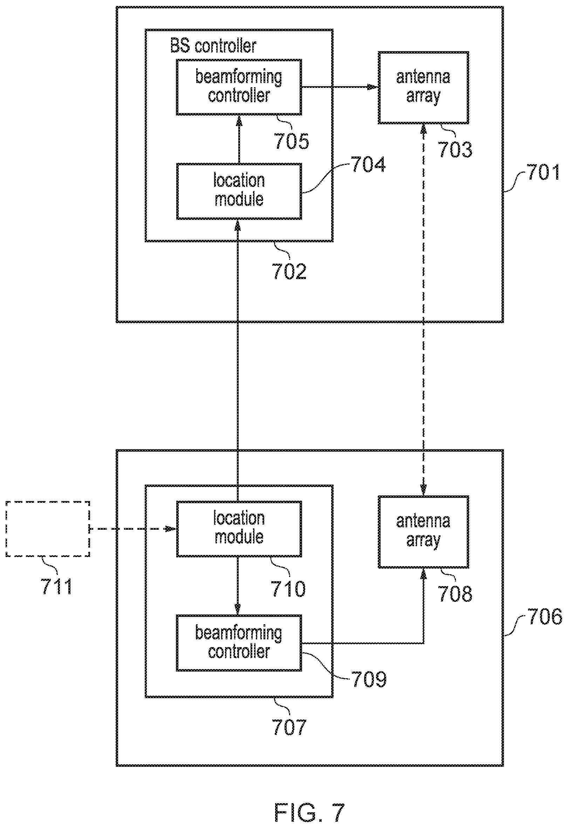

**Figure 7** illustrates an example of a base station 701 and a mobile device 706.

The base station 701 comprises a controller 702 and an antenna array 703. The controller 702 may comprise a location module 704 for obtaining location information relating to a location of the mobile device 706. In this example, the location module 704 obtains the location information from the mobile device 706, in particular from a location module 710 of the mobile device 706.

The base station controller also comprises a beam module 705 configured to select one of a plurality of antenna configurations for the antenna array 703 based on the location information, such that a first antenna configuration generating a first beam is selected when the mobile device 706 is located at a first location, and a second antenna configuration generating a second beam is selected when the mobile device 706 is located at a second location. The second beam is wider than the first beam, and the first location is a larger distance from the base station than the second location.

The antenna array 703 of the base station may then communicate with an antenna array 708 of the mobile device via the selected antenna configuration.

The mobile device 706 comprises a controller 707 and an antenna array 708. The controller is configured to control the antenna array such that it may communicate with a base station, such as the base station 701. The controller 707 comprises a location module 710 for obtaining location information relating to a location of the mobile device 706. In some examples, the location module 710 itself determines the location of the mobile device. In some alternative embodiments the location module may obtain the location information from some external module, 711, for example a GPS module.

The controller 707 also comprises a beam module 709 configured to select, based on the location information, one of a plurality of antenna configurations for generating one of a corresponding plurality of beams in the antenna array, such that a first antenna configuration generating a first beam is selected when the mobile device is located at a first location, and a second antenna configuration generating a second beam is selected when the mobile device is located at a second location. The second beam is wider than the first beam, and the first location is a larger distance from the radio access node than the second location.

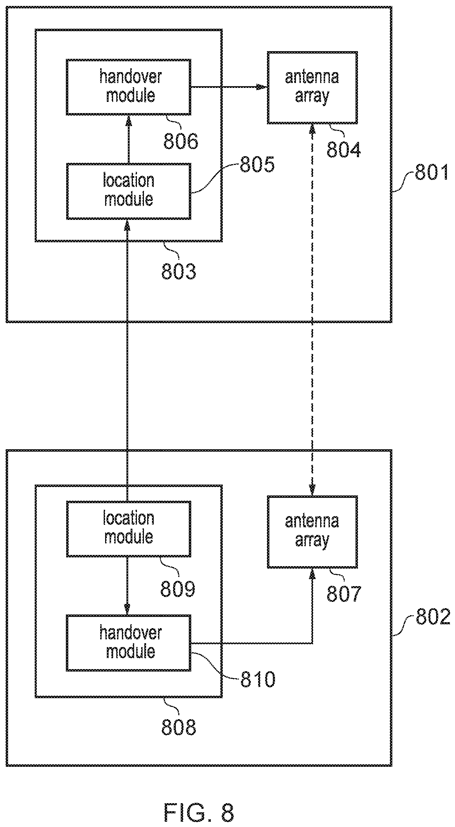

**Figure 8** illustrates an example of a base station 801 and a mobile device 802 according to further embodiments of the disclosure. The mobile device 802 may be constrained to move along a predetermined path.

The base station 801 comprises a controller 803 and an antenna array 804. The controller 803 may comprise a location module 805 for obtaining location information relating to the location of the mobile device on the predetermined path; and a handover module 806 configured to initiate a handover procedure to handover the mobile device to a second radio access node based on the location of the mobile device. In some embodiments, the location module 805 receives the location information from a location module 809 of the mobile device 802.

The antenna array 804 of the base station 801 may communicate with an antenna array 807 of the mobile device 802.

The mobile device 802 comprises a controller 808 which comprises a location module 809 for obtaining location information relating to the location of the mobile device 802 on the predetermined path; and a handover module 810 configured to initiate a handover procedure to handover the mobile device from the first radio access node to a second radio access node based on the location of the mobile device.

There are therefore provided methods and apparatus for communicating between base stations and mobile devices. In particular, the methods and apparatus described above may utilize knowledge of predetermined paths on which the mobile device may be travelling in order to reduce the signalling required for handover procedures and to predetermine the beams required to communicate with the mobile device.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A controller for a radio access node, the radio access node comprising a plurality of antenna elements for communicating wirelessly with a mobile device, the controller comprising:
a location module for obtaining location information relating to a location of the mobile device, the location information comprising information relating to the location of the mobile device along a predetermined path, and
a beam module configured to select, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the mobile device on the predetermined path; wherein
the second beam is wider than the first beam, and the first location is at a larger distance from the radio access node than the second location.

2. A controller as claimed in claim 1, wherein the predetermined path corresponds to a portion of railway track, and wherein the mobile device is mounted on a railway train.

3. A controller as claimed in any preceding claim, wherein the beam module is configured to switch between antenna configurations of the predetermined sequence based on the location information.

4. A controller as claimed in any preceding claim wherein the location module is configured to do one or more of the following:
obtain the location information from the mobile device via a wireless side-channel established between the radio access node and the mobile device, not using any of the plurality of beams; and
obtain velocity information of the mobile device and select one of the plurality of antenna configurations based further on the velocity information.

5. A controller as claimed in any preceding claim, wherein each beam of the plurality of beams has an azimuthal angle and a polar angle, and wherein the azimuthal angle is greater than the polar angle.

6. A controller as claimed in any preceding claim further comprising a handover module configured to initiate, based on the location of the mobile device, a handover procedure to handover the mobile device to a second radio access node, wherein the handover module is configured to initiate the handover procedure of the mobile device to the second radio access node responsive to a determination that the mobile device is located at a pre-determined location, wherein the handover module is preferably configured to determine the predetermined location at which handover is initiated based on historical data relating to past handover attempts between the radio access node and the second radio access node.

7. A controller as claimed in any preceding claim, wherein a location of the mobile device at which the beam module is configured to switch between antenna configurations is determined using historical data relating to a success rate of maintaining a connection whilst switching antenna configuration.

8. A radio access node comprising a controller as claimed in any one of the preceding claims.

9. A controller for a mobile device, the mobile device comprising a plurality of antenna elements for communicating with a radio access node, the controller comprising,
a location module for obtaining location information relating to a location of the mobile device, the location information comprising information relating to the location of the mobile device along a predetermined path, and
a beam module configured to select, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the radio access node in accordance with the location of the mobile device along the predetermined path; wherein
the second beam is wider than the first beam, and the first location is at a larger distance from the radio access node than the second location.

10. A controller as claimed in claim 9, wherein the predetermined path corresponds to a portion of railway track, and wherein the mobile device is mounted on a railway train.

11. A controller as claimed in any one of claims 9 to 10, wherein each beam of the plurality of beams has an azimuthal angle and a polar angle, and wherein the azimuthal angle is greater than the polar angle.

12. A controller as claimed in any one of claims 9 to 11 further comprising a handover module configured to initiate, based on the location of the mobile device, a handover procedure to handover the mobile device to a second radio access node, wherein the handover module is configured to initiate the handover procedure of the mobile device to the second radio access node responsive to a determination that the mobile device is located at a pre-determined location.

13. A mobile device comprising a controller as claimed in any one of claims 9 to 12.

14. A vehicle comprising one or more mobile devices as claimed in claim 13, the vehicle comprising,
a first mobile device located on a first end of the vehicle and a second mobile device located on a second end of the vehicle opposing the first end,
wherein the first mobile device is configured to complete a handover procedure from a first radio access node to a second radio access node before the second mobile device initiates a handover procedure from the first radio access node to the second radio access node.

15. A method of selecting an antenna configuration for a plurality of antenna elements providing communication between a radio access node and a mobile device, the method comprising,
obtaining location information relating to a location of the mobile device, the location information comprising information relating to the location of the mobile device along a predetermined path; and
selecting, based on the location information, one of a plurality of antenna configurations for generating one of a corresponding plurality of beams in the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the mobile device on the predetermined path; wherein
the second beam is wider than the first beam, and the first location is at a larger distance from the radio access node than the second location.

16. A method of selecting an antenna configuration for a plurality of antenna elements providing communication between a radio access node and a mobile device, the method comprising,
obtaining location information relating to a location of the mobile device, the location information comprising information relating to the location of the mobile device along a predetermined path, and
selecting, based on the location information, one of a plurality of antenna configurations for generating one of a corresponding plurality of beams at the plurality of antenna elements, such that a first antenna configuration generating a first beam is selected when the mobile device is located at a first location, and a second antenna configuration generating a second beam is selected when the mobile device is located at a second location, wherein the plurality of antenna configurations are arranged in a predetermined sequence for generating a predetermined sequence of beams configured to target the radio access node in accordance with the location of the mobile device along the predetermined path; wherein
the second beam is wider than the first beam, and the first location is at a larger distance from the radio access node than the second location.

## Patentansprüche

1. Steuerung für einen Funkzugangsknoten, wobei der Funkzugangsknoten mehrere Antennenelemente zum drahtlosen Kommunizieren mit einem mobilen Gerät umfasst, wobei die Steuerung umfasst:
ein Lokalisierungsmodul zum Erhalten von Standortinformationen bezüglich eines Standorts des mobilen Geräts, wobei die Standortinformationen Informationen bezüglich des Standorts des mobilen Geräts entlang eines vorbestimmten Pfads umfassen, und ein Strahlmodul, das dazu ausgelegt ist, basierend auf den Standortinformationen eine von mehreren Antennenkonfigurationen zum Erzeugen von mehreren entsprechenden Strahlen an den mehreren Antennenelementen auszuwählen, so dass eine erste Antennenkonfiguration ausgewählt wird, die einen ersten Strahl erzeugt, wenn die sich das mobile Gerät an einem ersten Standort befindet, und eine zweite Antennenkonfiguration, die einen zweiten Strahl erzeugt, ausgewählt wird, wenn sich das mobile Gerät an einem zweiten Standort befindet, wobei die mehreren Antennenkonfigurationen in einer vorbestimmten Sequenz angeordnet sind, um eine vorbestimmte Sequenz von Strahlen zu erzeugen, die dazu ausgelegt sind, das mobile Gerät auf dem vorbestimmten Pfad anzuzielen; wobei
der zweite Strahl breiter als der erste Strahl ist und der erste Standort einen größeren Abstand von dem Funkzugangsknoten hat als der zweite Standort.

2. Steuerung nach Anspruch 1, wobei der vorbestimmte Pfad einem Abschnitt eines Eisenbahngleises entspricht und wobei das mobile Gerät an einem Eisenbahnzug angebracht ist.

3. Steuerung nach einem der vorhergehenden Ansprüche, wobei das Strahlmodul dazu ausgelegt ist, basierend auf den Standortinformationen zwischen Antennenkonfigurationen der vorbestimmten Sequenz umzuschalten.

4. Steuerung nach einem der vorhergehenden Ansprüche, wobei das Lokalisierungsmodul dazu ausgelegt ist, eines oder mehreres des Folgenden zu tun:
Erhalten der Standortinformationen von dem mobilen Gerät über einen drahtlosen Seitenkanal, der zwischen dem Funkzugangsknoten und dem mobilen Gerät eingerichtet ist, ohne einen der mehreren Strahlen zu verwenden; und
Erhalten von Geschwindigkeitsinformationen des mobilen Geräts und Auswählen einer der mehreren Antennenkonfigurationen ferner basierend auf den Geschwindigkeitsinformationen.

5. Steuerung nach einem der vorhergehenden Ansprüche, wobei jeder Strahl der mehreren Strahlen einen Azimutwinkel und einen Polarwinkel hat und wobei der Azimutwinkel größer als der Polarwinkel ist.

6. Steuerung nach einem der vorhergehenden Ansprüche, ferner umfassend ein Übergabemodul, das dazu ausgelegt ist, basierend auf dem Standort des mobilen Geräts eine Übergabeprozedur zu initiieren, um das mobile Gerät an einen zweiten Funkzugangsknoten zu übergeben, wobei das Übergabemodul dazu ausgelegt ist, die Prozedur der Übergabe des mobilen Geräts an den zweiten Funkzugangsknoten als Reaktion auf eine Bestimmung, dass sich das mobile Gerät an einem vorbestimmten Standort befindet, zu initiieren, wobei das Übergabemodul vorzugsweise dazu ausgelegt ist, den vorbestimmten Standort, an dem die Übergabe initiiert wird, zu bestimmen basierend auf: historischen Daten bezüglich vergangener Übergabeversuche zwischen dem Funkzugangsknoten und dem zweiten Funkzugangsknoten.

7. Steuerung nach einem der vorhergehenden Ansprüche, wobei ein Standort des mobilen Geräts, an dem das Strahlmodul dazu ausgelegt ist, zwischen Antennenkonfigurationen umzuschalten, unter Verwendung von historischen Daten bezüglich einer Erfolgsrate des Aufrechterhaltens einer Verbindung während des Umschaltens der Antennenkonfiguration bestimmt wird.

8. Funkzugangsknoten, der eine Steuerung nach einem der vorhergehenden Ansprüche umfasst.

9. Steuerung für ein mobiles Gerät, wobei das mobile Gerät mehrere Antennenelemente zum Kommunizieren mit einem Funkzugangsknoten umfasst, wobei die Steuerung umfasst:
ein Lokalisierungsmodul zum Erhalten von Standortinformationen bezüglich eines Standorts des mobilen Geräts, wobei die Standortinformationen Informationen bezüglich des Standorts des mobilen Geräts entlang eines vorbestimmten Pfads umfassen, und
ein Strahlmodul, das dazu ausgelegt ist, basierend auf den Standortinformationen eine von mehreren Antennenkonfigurationen zum Erzeugen einer von mehreren entsprechenden Strahlen an den mehreren Antennenelementen auszuwählen, so dass eine erste Antennenkonfiguration ausgewählt wird, die einen ersten Strahl erzeugt, wenn die sich das mobile Gerät an einem ersten Standort befindet, und eine zweite Antennenkonfiguration, die einen zweiten Strahl erzeugt, ausgewählt wird, wenn sich das mobile Gerät an einem zweiten Standort befindet, wobei die mehreren Antennenkonfigurationen in einer vorbestimmten Sequenz angeordnet sind, um eine vorbestimmte Sequenz von Strahlen zu erzeugen, die dazu ausgelegt, den Funkzugangsknoten gemäß dem Standort des mobilen Geräts entlang des vorbestimmten Pfads anzuzielen; wobei der zweite Strahl breiter als der erste Strahl ist, und der erste Standort einen größeren Abstand von dem Funkzugangsknoten hat als der zweite Standort.

10. Steuerung nach Anspruch 9, wobei der vorbestimmte Pfad einem Abschnitt eines Eisenbahngleises entspricht und wobei die mobile Gerät an einem Eisenbahnzug angebracht ist.

11. Steuerung nach einem der Ansprüche 9 bis 10, wobei jeder Strahl der mehreren Strahlen einen Azimutwinkel und einen Polarwinkel hat und wobei der Azimutwinkel größer als der Polarwinkel ist.

12. Steuerung nach einem der Ansprüche 9 bis 11, die ferner ein Übergabemodul umfasst, das dazu ausgelegt ist, basierend auf dem Standort des mobilen Geräts eine Übergabeprozedur zu initiieren, um das mobile Gerät an einen zweiten Funkzugangsknoten zu übergeben, wobei das Übergabemodul dazu ausgelegt ist, die Prozedur der Übergabe des mobilen Geräts an den zweiten Funkzugangsknoten als Reaktion auf eine Bestimmung, dass sich das mobile Gerät an einem vorbestimmten Standort befindet, zu initiieren.

13. Mobiles Gerät, das ein Steuerung nach einem der Ansprüche 9 bis 12 umfasst.

14. Fahrzeug, das eines oder mehrere mobile Geräte nach Anspruch 13 umfasst, wobei das Fahrzeug umfasst:
ein erstes mobiles Gerät, die sich an einem ersten Ende des Fahrzeugs befindet, und ein zweites mobiles Gerät, die sich an einem zweiten Ende des Fahrzeugs, das dem ersten Ende gegenüberliegt, befindet,
wobei das erste mobile Gerät dazu ausgelegt ist, eine Übergabeprozedur von einem ersten Funkzugangsknoten zu einem zweiten Funkzugangsknoten abzuschließen, bevor das zweite mobile Gerät eine Übergabeprozedur von dem ersten Funkzugangsknoten an den zweiten Funkzugangsknoten initiiert.

15. Verfahren zum Auswählen einer Antennenkonfiguration für mehrere Antennenelemente, die eine Kommunikation zwischen einem Funkzugangsknoten und einem mobilen Gerät bereitstellen, wobei das Verfahren umfasst:
Erhalten von Standortinformationen bezüglich eines Standorts des mobilen Geräts, wobei die Standortinformationen Informationen bezüglich des Standorts des mobilen Geräts entlang eines vorbestimmten Pfads umfassen; und
Auswählen, basierend auf den Standortinformationen, einer von mehreren Antennenkonfigurationen zum Erzeugen eines von mehreren entsprechenden Strahlen an den mehreren Antennenelementen, so dass eine erste Antennenkonfiguration ausgewählt wird, die einen ersten Strahl erzeugt, wenn sich das mobile Gerät an einem ersten Standort befindet, und eine zweite Antennenkonfiguration, die einen zweiten Strahl erzeugt, ausgewählt wird, wenn sich das mobile Gerät an einem zweiten Standort befindet, wobei die mehreren Antennenkonfigurationen in einer vorbestimmten Sequenz angeordnet sind, um eine vorbestimmte Sequenz von Strahlen zu erzeugen, die dazu ausgelegt sind, das mobile Gerät auf dem vorbestimmten Pfad anzuzielen; wobei
der zweite Strahl breiter als der erste Strahl ist und der erste Standort einen größeren Abstand von dem Funkzugangsknoten hat als der zweite Standort.

16. Verfahren zum Auswählen einer Antennenkonfiguration für mehrere Antennenelemente, die eine Kommunikation zwischen einem Funkzugangsknoten und einem mobilen Gerät bereitstellen, wobei das Verfahren umfasst:
Erhalten von Standortinformationen bezüglich eines Standorts des mobilen Geräts, wobei die Standortinformationen Informationen bezüglich des Standorts des mobilen Geräts entlang eines vorbestimmten Pfads umfassen, und
Auswählen, basierend auf den Standortinformationen, einer von mehreren Antennenkonfigurationen zum Erzeugen eines von mehreren entsprechenden Strahlen an den mehreren Antennenelementen, so dass eine erste Antennenkonfiguration ausgewählt wird, die einen ersten Strahl erzeugt, wenn sich das mobile Gerät an einem ersten Standort befindet, und eine zweite Antennenkonfiguration, die einen zweiten Strahl erzeugt, ausgewählt wird, wenn sich das mobile Gerät an einem zweiten Standort befindet, wobei die mehreren Antennenkonfigurationen in einer vorbestimmten Sequenz angeordnet sind, um eine vorbestimmte Sequenz von Strahlen zu erzeugen, die dazu ausgelegt sind, den Funkzugangsknoten gemäß dem Standort des mobile Geräts entlang des vorbestimmten Pfads anzuzielen; wobei
der zweite Strahl breiter als der erste Strahl ist und der erste Standort einen größeren Abstand von dem Funkzugangsknoten hat als der zweite Standort.

## Revendications

1. Dispositif de commande pour un nœud d'accès radio, le nœud d'accès radio comprenant une pluralité d'éléments d'antenne pour communiquer sans fil avec un dispositif mobile, le dispositif de commande comprenant :
un module de localisation pour obtenir des informations d'emplacement relatives à un emplacement du dispositif mobile, les informations d'emplacement comprenant des informations relatives à l'emplacement du dispositif mobile le long d'un trajet prédéterminé, et
un module de faisceau configuré pour sélectionner, sur la base des informations d'emplacement, l'une parmi une pluralité de configurations d'antenne pour générer l'un parmi une pluralité correspondante de faisceaux au niveau de la pluralité d'éléments d'antenne, de sorte qu'une première configuration d'antenne générant un premier faisceau soit sélectionnée lorsque le dispositif mobile est situé à un premier emplacement, et une deuxième configuration d'antenne générant un deuxième faisceau soit sélectionnée lorsque le dispositif mobile est situé à un deuxième emplacement, dans lequel la pluralité de configurations d'antenne sont agencées dans une séquence prédéterminée pour générer une séquence prédéterminée de faisceaux configurés pour cibler le dispositif mobile sur le trajet prédéterminé ; dans lequel
le deuxième faisceau est plus large que le premier faisceau, et le premier emplacement est à une distance plus grande du nœud d'accès radio que le deuxième emplacement.

2. Dispositif de commande selon la revendication 1, dans lequel le trajet prédéterminé correspond à une portion d'une voie ferrée, et dans lequel le dispositif mobile est monté sur un train ferroviaire.

3. Dispositif de commande selon l'une quelconque des revendications précédentes, dans lequel le module de faisceau est configuré pour commuter entre des configurations d'antenne de la séquence prédéterminée sur la base des informations d'emplacement.

4. Dispositif de commande selon l'une quelconque des revendications précédentes, dans lequel le module de localisation est configuré pour réaliser un ou plusieurs parmi ce qui suit :
obtenir les informations d'emplacement depuis le dispositif mobile via un canal latéral sans fil établi entre le nœud d'accès radio et le dispositif mobile, n'utilisant aucun de la pluralité de faisceaux ; et
obtenir des informations de vitesse du dispositif mobile et sélectionner l'une parmi la pluralité de configurations d'antenne sur la base en outre des informations de vitesse.

5. Dispositif de commande selon l'une quelconque des revendications précédentes, dans lequel chaque faisceau parmi la pluralité de faisceaux a un angle azimutal et un angle polaire, et dans lequel l'angle azimutal est plus grand que l'angle polaire.

6. Dispositif de commande selon l'une quelconque des revendications précédentes, comprenant en outre un module de transfert intercellulaire configuré pour lancer, sur la base de l'emplacement du dispositif mobile, une procédure de transfert intercellulaire pour réaliser le transfert intercellulaire du dispositif mobile à un deuxième nœud d'accès radio, dans lequel le module de transfert intercellulaire est configuré pour lancer la procédure de transfert intercellulaire du dispositif mobile au deuxième nœud d'accès radio en réponse à une détermination que le dispositif mobile est situé à un emplacement prédéterminé, dans lequel le module de transfert intercellulaire est de préférence configuré pour déterminer l'emplacement prédéterminé auquel un transfert intercellulaire est lancé sur la base de données historiques relatives à des tentatives antérieures de transfert intercellulaire entre le premier nœud d'accès radio et le deuxième nœud d'accès radio.

7. Dispositif de commande selon l'une quelconque des revendications précédentes, dans lequel un emplacement du dispositif mobile auquel le module de faisceau est configuré pour commuter entre des configurations d'antenne est déterminé en utilisant des données historiques relatives à un taux de réussite de maintien d'une connexion pendant la commutation de configuration d'antenne.

8. Nœud d'accès radio comprenant un dispositif de commande selon l'une quelconque des revendications précédentes.

9. Dispositif de commande pour un dispositif mobile, le dispositif mobile comprenant une pluralité d'éléments d'antenne pour communiquer avec un nœud d'accès radio, le dispositif de commande comprenant :
un module de localisation pour obtenir des informations d'emplacement relatives à un emplacement du dispositif mobile, les informations d'emplacement comprenant des informations relatives à l'emplacement du dispositif mobile le long d'un trajet prédéterminé, et
un module de faisceau configuré pour sélectionner, sur la base des informations d'emplacement, l'une parmi une pluralité de configurations d'antenne pour générer l'un parmi une pluralité correspondante de faisceaux au niveau de la pluralité d'éléments d'antenne, de sorte qu'une première configuration d'antenne générant un premier faisceau soit sélectionnée lorsque le dispositif mobile est situé à un premier emplacement, et une deuxième configuration d'antenne générant un deuxième faisceau soit sélectionnée lorsque le dispositif mobile est situé à un deuxième emplacement, dans lequel la pluralité de configurations d'antenne sont agencées dans une séquence prédéterminée pour générer une séquence prédéterminée de faisceaux configurés pour cibler le nœud d'accès radio en fonction de l'emplacement du dispositif mobile le long du trajet prédéterminé ; dans lequel
le deuxième faisceau est plus large que le premier faisceau, et le premier emplacement est à une distance plus grande du nœud d'accès radio que le deuxième emplacement.

10. Dispositif de commande selon la revendication 9, dans lequel le trajet prédéterminé correspond à une portion d'une voie ferrée, et dans lequel le dispositif mobile est monté sur un train ferroviaire.

11. Dispositif de commande selon l'une quelconque des revendications 9 et 10, dans lequel chaque faisceau parmi la pluralité de faisceaux a un angle azimutal et un angle polaire, et dans lequel l'angle azimutal est plus grand que l'angle polaire.

12. Dispositif de commande selon l'une quelconque des revendications 9 à 11, comprenant en outre un module de transfert intercellulaire configuré pour lancer, sur la base de l'emplacement du dispositif mobile, une procédure de transfert intercellulaire pour réaliser le transfert intercellulaire du dispositif mobile à un deuxième nœud d'accès radio, dans lequel le module de transfert intercellulaire est configuré pour lancer la procédure de transfert intercellulaire du dispositif mobile au deuxième nœud d'accès radio en réponse à une détermination que le dispositif mobile est situé à un emplacement prédéterminé.

13. Dispositif mobile comprenant un dispositif de commande selon l'une quelconque des revendications 9 à 12.

14. Véhicule comprenant un ou plusieurs dispositifs mobiles selon la revendication 13, le véhicule comprenant :
un premier dispositif mobile situé à une première extrémité du véhicule et un deuxième dispositif mobile situé à une deuxième extrémité du véhicule à l'opposé de la première extrémité,
dans lequel le premier dispositif mobile est configuré pour réaliser une procédure de transfert intercellulaire depuis un premier nœud d'accès radio à un deuxième nœud d'accès radio avant que le deuxième dispositif mobile ne lance une procédure de transfert intercellulaire depuis le premier nœud d'accès radio au deuxième nœud d'accès radio.

15. Procédé de sélection d'une configuration d'antenne pour une pluralité d'éléments d'antenne fournissant une communication entre un nœud d'accès radio et un dispositif mobile, le procédé comprenant :
l'obtention d'informations d'emplacement relatives à un emplacement du dispositif mobile, les informations d'emplacement comprenant des informations relatives à l'emplacement du dispositif mobile le long d'un trajet prédéterminé ; et
la sélection, sur la base des informations d'emplacement, de l'une parmi une pluralité de configurations d'antenne pour générer l'un parmi une pluralité correspondante de faisceaux dans la pluralité d'éléments d'antenne, de sorte qu'une première configuration d'antenne générant un premier faisceau soit sélectionnée lorsque le dispositif mobile est situé à un premier emplacement, et une deuxième configuration d'antenne générant un deuxième faisceau soit sélectionnée lorsque le dispositif mobile est situé à un deuxième emplacement, dans lequel la pluralité de configurations d'antenne sont agencées dans une séquence prédéterminée pour générer une séquence prédéterminée de faisceaux configurés pour cibler le dispositif mobile sur le trajet prédéterminé ; dans lequel
le deuxième faisceau est plus large que le premier faisceau, et le premier emplacement est à une distance plus grande du nœud d'accès radio que le deuxième emplacement.

16. Procédé de sélection d'une configuration d'antenne pour une pluralité d'éléments d'antenne fournissant une communication entre un nœud d'accès radio et un dispositif mobile, le procédé comprenant :
l'obtention d'informations d'emplacement relatives à un emplacement du dispositif mobile, les informations d'emplacement comprenant des informations relatives à l'emplacement du dispositif mobile le long d'un trajet prédéterminé, et
la sélection, sur la base des informations d'emplacement, de l'une parmi une pluralité de configurations d'antenne pour générer l'un parmi une pluralité correspondante de faisceaux au niveau de la pluralité d'éléments d'antenne, de sorte qu'une première configuration d'antenne générant un premier faisceau soit sélectionnée lorsque le dispositif mobile est situé à un premier emplacement, et une deuxième configuration d'antenne générant un deuxième faisceau soit sélectionnée lorsque le dispositif mobile est situé à un deuxième emplacement, dans lequel la pluralité de configurations d'antenne sont agencées dans une séquence prédéterminée pour générer une séquence prédéterminée de faisceaux configurés pour cibler le nœud d'accès radio en fonction de l'emplacement du dispositif mobile le long du trajet prédéterminé ; dans lequel
le deuxième faisceau est plus large que le premier faisceau, et le premier emplacement est à une distance plus grande du nœud d'accès radio que le deuxième emplacement.
